# EUROPÄISCHE PATENTSCHRIFT

(11) **EP 3 371 470 B1**
(45) Veröffentlichungstag und Bekanntmachung des Hinweises auf die Patenterteilung: **27.02.2019**
(21) Anmeldenummer: 16801688.9
(22) Anmeldetag: 07.11.2016
(51) Int. Cl.: F16C 7/06, F02B 75/04, F15B 15/14

(54) **LÄNGENVERSTELLBARE PLEUELSTANGE**
LENGTH-ADJUSTABLE CONNECTING ROD
BIELLE RÉGLABLE EN LONGUEUR

(30) Priorität: 05.11.2015 AT 509422015
(43) Veröffentlichungstag der Anmeldung: 12.09.2018
(73) Patentinhaber: AVL List GmbH, 8020 Graz (AT)
(72) Erfinder: MELDE-TUCZAI, Helmut, 8042 Graz (AT); HARTWIG, Siegfried, 8052 Graz (AT)
(74) Vertreter: Babeluk, Michael
(86) Internationale Anmeldenummer: PCT/AT2016/060103
(87) Internationale Veröffentlichungsnummer: WO 2017/075646

(56) Entgegenhaltungen:
- WO-A2-2015/055582

## Beschreibung

Die Erfindung betrifft eine längenverstellbare Pleuelstange für eine Hubkolbenmaschine, insbesondere Brennkraftmaschine, mit zumindest einem ersten Stangenteil mit einem kleinen Pleuelauge und zumindest einem zweiten Stangenteil mit einem großen Pleuelauge, welche beiden Stangenteile in Richtung einer Längsachse der Pleuelstange teleskopartig zu- und/oder ineinander verschiebbar sind, wobei der zweite Stangenteil einen Führungszylinder aufweist und der erste Stangenteil fest mit einem im Führungszylinder längsverschiebbaren Kolbenelement verbunden ist, wobei auf einer ersten Seite des Kolbenelementes zwischen dem zweiten Stangenteil und dem Kolbenelement ein erster Hochdruckraum und auf einer zweiten Seite des Kolbenelements ein zweiter Hochdruckraum aufgespannt ist, wobei jeder Hochdruckraum mit zumindest einem Ölkanal strömungsverbunden ist, und wobei zur Abdichtung zumindest eines Hochdruckraumes zumindest ein Dichtelementvorgesehen ist.

Die Druckschrift WO2015/055582 A2 offenbart eine Brennkraftmaschine mit einer längenverstellbaren Pleuelstange mit einem ersten und einem zweiten Stangenteil, welche Stangenteile teleskopartig zu - und ineinander verschiebbar sind. Der zweite Stangenteil weist dabei einen als Stufenkolben ausgebildetes Kolbenelement auf, welches in einem durch den ersten Stangenteil gebildeten Führungszylinder geführt ist. Das Kolbenelement grenzt mit einander abgewandten Stirnseiten jeweils an einen Hochdruckraum, welcher zwischen dem ersten und den zweiten Stangenteil angeordnet ist. Zur Rückbefüllung und Entleerung des Hochdruckraumes mit Öl und somit zur Längenverstellung der Pleuelstange ist ein Steuerventil in er Pleuelstange vorgesehen. Zur Abdichtung der Hochdruckräume ist zwischen dem Kolbenelement und dem Führungszylinder, sowie zwischen dem zweiten Stangenteil und einer fest mit dem ersten Stangenteil verbundenen Spannhülse jeweils ein Dichtelement - beispielsweise ein O-Ring - angeordnet. Dabei kann es allerdings zu einem axialen Quetschen und damit einhergehend einem starken Verschleiß der Dichtelemente auf Grund der axialen Bewegung entlang der Innenflächen des Führungszylinders bzw. der Spannhülse kommen.
Aufgabe der Erfindung ist es, die genannten Nachteile zu vermeiden und auf möglichst einfache, kompakte und zuverlässige Weise eine verschleißarme Abdichtung zwischen den beiden Stangenteilen zu ermöglichen.
Erfindungsgemäß wird dies dadurch erreicht, dass das Kolbenelement in einem Presssitzbereich über eine Übermaßpassung mit dem ersten Stangenteil kraftschlüssig verbunden ist.

Vorzugsweise sind der Presssitzbereich des Kolbenelementes durch eine innere Mantelfläche eines dem kleinen Pleuelauge zugewandten ringförmigen Endbereichs des Kolbenelementes und der Presssitzbereich des ersten Stangenteils durch eine äußere Mantelfläche eines dem kleinen Pleuelauge abgewandten Absatzbereichs des ersten Stangenteils gebildet. Der innere Durchmesser der inneren Mantelfläche des ringförmigen Endbereichs ist - vor der Montage - zumindest im Presssitzbereich kleiner ausgebildet als der äußere Durchmesser der äußeren Mantelfläche des Absatzbereichs. Durch diese Übermaßpassung kommt es nach der Montage zu einer - betriebsmäßig nicht lösbaren - kraftschlüssigen Verbindung zwischen dem Kolbenelement und dem ersten Stangenteil. Durch die Übermaßpassung kann auf eine radiale Schulter, über welche sich das Kolbenelement und der erste Stangenteil - zur Entlastung des zweiten Dichtelementes - gegeneinander abstützen, verzichtet werden. Eine solche radiale Schulter hätte den Nachteil, dass relativ viel Platzbedarf in radialer Richtung notwendig wäre, was die Baugröße und das Gewicht des Pleuels wesentlich erhöhen würde. Dagegen erlaubt die erfindungsgemäße Lösung, die Größe der Pleuelstange und deren Gewicht möglichst klein zu halten.

In einer Variante der Erfindung ist zur Abdichtung des zweiten Hochdruckraumes zwischen dem ersten Stangenteil und dem zweiten Stangenteil oder einer fest mit dem zweiten Stangenteil verbundenen Spannhülse zumindest ein zweites Dichtungselement anschließend an den Presssitzbereich des Kolbenelementes in Richtung der Längsachse kraftfrei zwischen dem ersten Stangenteil und dem Kolbenelement angeordnet. Um ein axiales Quetschen des zweiten Dicht- bzw. Dichtungselementes zusätzlich auszuschließen, ist es vorteilhaft, wenn das zweite Dichtungselement in Richtung der Längsachse ein definiertes Spiel gegenüber dem Kolbenelement und/oder dem zweiten Stangenteil aufweist.

In einer bevorzugten Ausführung der Erfindung ist vorgesehen, dass das Kolbenelement einen ersten Kolbenteil und einen zweiten Kolbenteil aufweist, wobei der erste Kolbenteil an den ersten Hochdruckraum und der zweite Kolbenteil an den zweiten Hochdruckraum grenzt, wobei vorzugsweise der zweite Kolbenteil den Presssitzbereich des Kolbenelementes ausbildet.

Die Übermaßpassung ist so gewählt, dass die Massenkraft des zweiten Kolbenelementes auf den ersten Stangenteil übertragen werden kann.

Eine vorteilhafte Ausführung der Erfindung sieht vor, dass der erste Kolbenteil mit dem ersten Stangenteil verschraubt ist, wobei vorzugsweise der erste Kolbenteil eine Sackbohrung mit einem Innengewinde aufweist, welches mit einem Außengewinde des ersten Stangenteils verschraubt ist. Der an den ersten Hochdruckraum grenzende erste Kolbenteil ist also ähnlich einer Hutmutter ausgeführt und auf den ersten Stangenteil von einer dem kleinen Pleuelauge abgewandten Seite aufgeschraubt.

Dadurch, dass der erste Kolbenteil ähnlich einer Hutmutter eine Sackbohrung mit einem Innengewinde aufweist, kann eine innere Leckage über das Gewinde der Schraubverbindung vermieden wird. Alternativ dazu ist prinzipiell auch eine Ausführung mit herkömmlicher Mutter möglich - für diese werden dann aufgrund der erwähnten Leckage zusätzliche Dichtelemente vorgesehen.

Günstigerweise sind der erste Kolbenteil und der zweite Kolbenteil durch ringförmige Kontaktflächen in Richtung der Längsachse miteinander verbunden, welche vorzugsweise normal auf die Längsachse angeordnet sind. Besonders vorteilhaft ist es dabei, wenn zur Abdichtung des ersten Hochdruckraumes zwischen Kolbenelement und Führungszylinder anschließend an zumindest eine Kontaktfläche zumindest ein erstes Dicht- bzw. Dichtungselement in Richtung der Längsachse kraftfrei zwischen dem ersten Kolbenteil und dem zweiten Kolbenteil angeordnet ist. Vorzugsweise weist dabei das erste Dichtungselement in Richtung der Längsachse ein definiertes Spiel gegenüber dem ersten Kolbenteil und/oder dem zweiten Kolbenteil auf. Dadurch wird ein axiales Quetschen des ersten Dichtungselementes zuverlässig vermieden.

Bei der Montage wird der zweite Kolbenteil mit seinem Presssitzbereich durch Festschrauben des ersten Kolbenteils am ersten Stangenteil über den Presssitzbereich des ersten Stangenteils geschoben. Durch die Vorspannkraft der durch das Innengewinde des ersten Kolbenteils und das Außengewinde des ersten Stangenteils gebildeten Schraubverbindung kann dabei der Widerstand durch die Übermaßpassung mit relativ geringem Aufwand überwunden werden.

Die Erfindung wird im Folgenden anhand des in den Figuren dargestellten, nicht einschränkenden Ausführungsbeispiels näher erläutert. Darin zeigen schematisch:
- Fig. 1: eine erfindungsgemäße Pleuelstange in einem Längsschnitt in einer ersten Schaltstellung;
- Fig. 2: diese Pleuelstange in einem Längsschnitt in einer zweiten ersten Schaltstellung; und
- Fig. 3: einen Montageschritt dieser Pleuelstange in einem Längsschnitt.

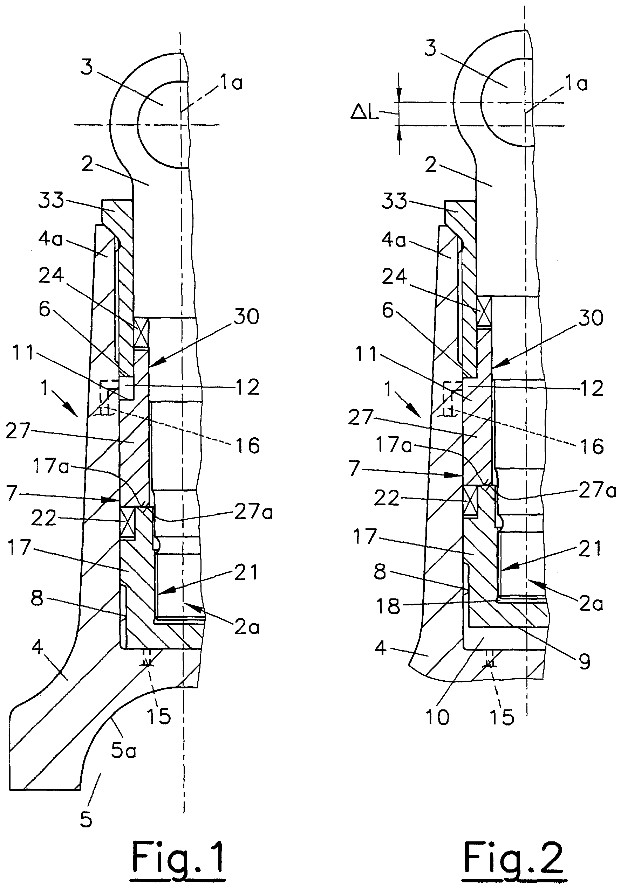

In den Fig. 1 und Fig. 2 ist jeweils nur eine Halbseite der Pleuelstange 1 dargestellt.

Fig. 1 und Fig. 2 zeigen jeweils eine zweigeteilte Pleuelstange 1 einer Hubkolbenmaschine, insbesondere einer Brennkraftmaschine mit einem oberen ersten Stangenteil 2 mit dem kleinen Pleuelauge 3 zur Verbindung mit einem nicht weiter dargestellten Kolben und einen unteren zweiten Stangenteil 4 mit dem ein Pleuellager 5a ausbildenden großen Pleuelauge 5 zur Verbindung mit einer nicht weiter dargestellten Kurbelwelle. Der erste Stangenteil 2 ist gegenüber dem zweiten Stangenteil 4 zwischen einer ausgezogenen Lage und einer eingeschobenen Lage um einen durch einen Endanschlag 6 begrenzten Verstellbereich in Richtung der Längsachse 1a der Pleuelstange 1 verstellbar. Im oberen ersten Stangenteil 2 ist ein im Wesentlichen zylindrisches Kolbenelement 7 befestigt.

Der erste Stangenteil 2 und der zweite Stangenteil 4 der Pleuelstange 1 sind in Druckrichtung hydraulisch gekoppelt und in der Gegenrichtung mechanisch durch den Endanschlag 6 in ihrer Bewegung begrenzt. Druckrichtung bedeutet hier die Richtung, in die die Kraft der Verbrennung im Kolbenraum auf den nicht dargestellten Kolben wirkt. Als hydraulische Kopplung ist hier zu verstehen, dass bei jeder Einstellung der Pleuelstange 1 jeweils ein anderswo angeordneter Hydraulikpolster den ersten Stangenteil 2 gegen den zweiten Stangenteil 4 abstützt.

Das als Stufenkolben ausgebildete Kolbenelement 7 ist in einem Führungszylinder 8 des unteren zweiten Stangenteils 4 der Pleuelstange 1 axial (in Richtung der Längsachse 1a der Pleuelstange 1) verschiebbar geführt, wobei zwischen einer dem großen Pleuelauge 5 zugewandten ersten Stirnfläche 9 des Kolbenelementes 7 und dem zweiten Stangenteil 4 bzw. dem Führungszylinder 8 in einer in Fig. 2 dargestellten ausgezogenen Lage der beiden Stangenteile 2, 4 ein erster Hochdruckraum 10 aufgespannt wird. Weiters wird zwischen einer dem kleinen Pleuelauge 3 zugewandten zweiten Stirnfläche 11 des Kolbenelementes 7 und dem zweiten Stangenteil 4 in einer zusammengeschobenen Lage der beiden Stangenteile 2, 4 ein zweiter Hochdruckraum 12 aufgespannt. Im dargestellten Ausführungsbeispiel wird der zweite Hochdruckraum 12 zwischen der zweiten Stirnfläche 11 und einer Spannhülse 33 als Teil des zweiten Stangenteils 4 aufgespannt.

Unter einem Stufenkolben wird im Allgemeinen ein Kolben - im vorliegenden Fall ein "zweiseitig wirkender Kolben" - mit unterschiedlich großen Wirkflächen verstanden, wobei eine der Wirkflächen (hier: die gegen den zweiten Hochdruckraum 12 orientierte Wirkfläche) als Ringfläche und die andere Wirkfläche als Kreisfläche ausgebildet ist. Durch die unterschiedlichen Wirkflächen lassen sich verschiedene Druckverhältnisse realisieren.

Die ringförmigen ersten Stirnflächen 9 und zweiten Stirnflächen 11 bilden Druckangriffsflächen für ein in die Hochdruckräume 10, 12 geleitetes und unter Druck stehendes Betätigungsmedium, beispielsweise Motoröl.

Der erste Hochdruckraum 10 und der zweite Hochdruckraum 12 sind über Ölkanäle 15, 16 mit einem beispielsweise als einfaches Umschaltventil ausgeführten nicht weiter dargestellten Steuerventil verbunden, welches wahlweise den ersten 10 oder zweiten Hochdruckraum 12 mit Öldruck beaufschlagt. Die Beaufschlagung der Hochdruckräume 10, 12 mit Öl ist nicht Teil der Erfindung - sie kann beispielsweise in einer ähnlichen Weise erfolgen, wie in der AT 514 071 B1 beschrieben ist.

Das Volumen des ersten Hochdruckraumes 10 ist durch eine in den Schaftteil 4a des zweiten Stangenteiles 4 eingeschraubte Spannhülse 33 begrenzt, welche den maximal möglichen Hub des Kolbenelementes 7 definiert. Je nach Länge dieser Spannhülse 33 lässt sich der Verstellbereich ΔL der Pleuellänge der langenverstellbaren Pleuelstange 1 beliebig einstellen.

Wie aus den Fig. deutlich hervorgeht, besteht das Kolbenelement 7 aus einem ersten Kolbenteil 17 und einem zweiten Kolbenteil 27. Der erste Kolbenteil 17 grenzt dabei an den ersten Hochdruckraum 10, der zweite Kolbenteil 27 an den zweiten Hochdruckraum 12.

Der erste Kolbenteil 17 ist mit dem ersten Stangenteil 2 an dessen dem kleinen Pleuelauge 3 abgewandten Ende 2a verschraubt. Der erste Kolbenteil 17 weist dabei eine Sackbohrung 18 mit einem Innengewinde 19 auf, welches mit einem Außengewinde 20 des ersten Stangenteils 2 verschraubt ist. Innengewinde 19 und Außengewinde 20 bilden somit eine Verschraubung 21 zwischen Kolbenelement 7 und dem ersten Stangenteil 2. Der erste Kolbenteil 17 ist also ähnlich einer Hutmutter ausgeführt und auf den ersten Stangenteil 2 von einer dem kleinen Pleuelauge 3 abgewandten Seite aufgeschraubt. Durch die einer Hutmutter ähnliche Ausführung des ersten Kolbenteils 17 kann eine innere Leckage über das Gewinde der Schraubverbindung 21 vermieden wird.

Der erste Kolbenteil 17 und der zweite Kolbenteil 27 des Kolbenelementes 7 sind durch ringförmige Kontaktflächen 17a, 27a in Richtung der Längsachse 1a miteinander verbunden bzw. miteinander in Kontakt, welche Kontaktflächen 17a, 27a im Ausführungsbeispiel normal auf die Längsachse 1a der Pleuelstange 1 verlaufend angeordnet sind. Anschließend an die Kontaktfläche 27a des zweiten Kolbenteils 27 ist ein erstes Dichtungselement 22 in Richtung der Längsachse 1a kraftfrei zwischen dem ersten Kolbenteil 17 und dem zweiten Kolbenteil 27 angeordnet. Die axial kraftfreie Anordnung wird durch ein definiertes Spiel in Richtung der Längsachse 1a des ersten Dichtelementes 22 gegenüber dem ersten Kolbenteil 17 und/oder dem zweiten Kolbenteil 27 erreicht. Dadurch kann eine Quetschung des ersten Dichtelementes 22 in Richtung der Längsachse ausgeschlossen werden, welche zu einem erhöhten Verschleiß des ersten Dichtelementes 22 führen würde.

Der zweite Kolbenteil 27 des Kolbenelementes 7 ist in seinem Presssitzbereich 30a über eine Übermaßpassung 30 mit einem korrespondierenden Presssitzbereich 30b des ersten Stangenteils 2 kraftschlüssig verbunden. Anschließend an die Presssitzbereiche 30a, 30b ist in Richtung der Längsachse 1a kraftfrei zwischen dem ersten Stangenteil 2 und dem zweiten Kolbenteil 27 ein zweites Dichtelement 24 angeordnet.

Der Presssitzbereich 30a des Kolbenelementes 7 wird durch eine innere Mantelfläche 27b eines dem kleinen Pleuelauge 3 zugewandten ringförmigen Endbereichs 7a des Kolbenelementes 7 und der Presssitzbereich 30b des ersten Stangenteils 2 durch eine äußere Mantelfläche 23a eines dem kleinen Pleuelauge 3 abgewandten, an den das kleine Pleuelauge 3 enthaltenden Abschnitt des ersten Stangenteils 2 anschließenden Absatzbereichs 23 des ersten Stangenteils 2 gebildet. Der innere Durchmesser d der inneren Mantelfläche 27b des ringförmigen Endbereichs 7a ist - vor der Montage - zumindest im Presssitzbereich 30a des Kolbenelementes 7 kleiner ausgebildet als der äußere Durchmesser D der äußeren Mantelfläche 23a des Absatzbereichs 23 des ersten Stangenteiles 2. Durch diese Übermaßpassung 30 kommt es nach der Montage zu einer - betriebsmäßig nicht lösbaren - kraftschlüssigen Verbindung zwischen dem Kolbenelement 7 und dem ersten Stangenteil 2. Die erfindungsgemäße Lösung erlaubt es, die Größe der Pleuelstange 1 und deren Gewicht möglichst klein zu halten. Die Übermaßpassung 30 ist so gewählt, dass die Massenkraft des zweiten Kolbenteils 27 des Kolbenelementes 7 auf den ersten Stangenteil 2 übertragen werden kann.

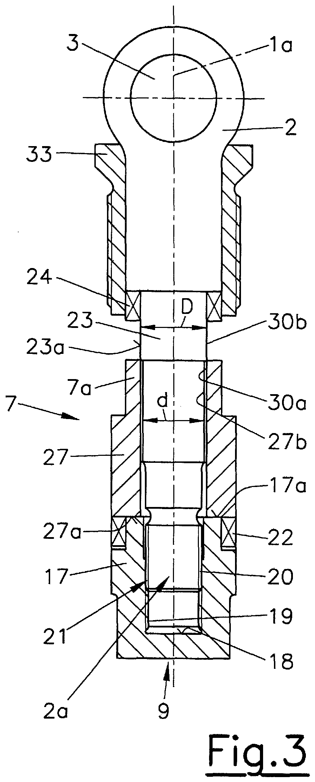

Fig. 3 zeigt die Montage des Kolbenelementes 7 am ersten Stangenteil 2. Dabei wird der zweite Kolbenteil 27 mit seinem Presssitzbereich 30a durch Festschrauben des ersten Kolbenteils 17 am ersten Stangenteil 2 über den Presssitzbereich 30b des ersten Stangenteils 2 geschoben. Durch die Vorspannkraft der Schraubverbindung 21 kann lässt sich der durch die Übermaßpassung 30 hervorgerufene Widerstand relativ leicht überwinden.

## Patentansprüche

1. Längenverstellbare Pleuelstange (1) für eine Hubkolbenmaschine, insbesondere Brennkraftmaschine, mit zumindest einem ersten Stangenteil (2) mit einem kleinen Pleuelauge (3) und zumindest einem zweiten Stangenteil (4) mit einem großen Pleuelauge (5), welche beiden Stangenteile (2, 4) in Richtung einer Längsachse (1a) der Pleuelstange (1) teleskopartig zu- und/oder ineinander verschiebbar sind, wobei der zweite Stangenteil (4) einen Führungszylinder (8) aufweist und der erste Stangenteil (2) fest mit einem im Führungszylinder (8) längsverschiebbaren Kolbenelement (7) verbunden ist, wobei auf einer ersten Seite des Kolbenelementes (7) zwischen dem zweiten Stangenteil (4) und dem Kolbenelement (7) ein erster Hochdruckraum (10) und auf einer zweiten Seite des Kolbenelements (7) ein zweiter Hochdruckraum (12) aufgespannt ist, wobei jeder Hochdruckraum (10, 12) mit zumindest einem Ölkanal (15, 16) strömungsverbunden ist, und wobei zur Abdichtung zumindest eines Hochdruckraums (10, 12) zumindest ein Dichtelement (22, 24) vorgesehen ist, **dadurch gekennzeichnet, dass** das Kolbenelement (7) in einem Presssitzbereich (30a) mit dem ersten Stangenteil (2) über eine Übermaßpassung (30) kraftschlüssig verbunden ist.

2. Pleuelstange (1) nach Anspruch 1, **dadurch gekennzeichnet, dass** der Presssitzbereich (30a) des Kolbenelementes (7) durch eine innere Mantelfläche (27b) eines dem kleinen Pleuelauge (3) zugewandten ringförmigen Endbereichs (7a) des Kolbenelementes (7) und der Presssitzbereich (30b) des ersten Stangenteils (2) durch eine äußere Mantelfläche (23a) eines dem kleinen Pleuelauge (3) abgewandten Absatzbereichs (23) des ersten Stangenteils (2) gebildet sind.

3. Pleuelstange (1) nach Anspruch 1 oder 2, **dadurch gekennzeichnet, dass** zur Abdichtung des zweiten Hochdruckraumes (12) zwischen dem ersten Stangenteil (2) und dem zweiten Stangenteil (4) oder einer fest mit dem zweiten Stangenteil (4) verbundenen Spannhülse (33) zumindest ein zweites Dichtungselement (24) anschließend an den Presssitzbereich (30a) des Kolbenelementes (7) in Richtung der Längsachse (1a) kraftfrei zwischen dem ersten Stangenteil (2) und dem Kolbenelement (7) angeordnet ist, wobei vorzugsweise das zweite Dichtungselement (24) in Richtung der Längsachse (1a) ein definiertes Spiel gegenüber dem Kolbenelement (7) und/oder dem zweiten Stangenteil (2) aufweist.

4. Pleuelstange (1) nach einem der Ansprüche 1 bis 3, **dadurch gekennzeichnet, dass** das Kolbenelement (7) einen ersten Kolbenteil (17) und einen zweiten Kolbenteil (27) aufweist, wobei der erste Kolbenteil (17) an den ersten Hochdruckraum (10) und der zweite Kolbenteil (27) an den zweiten Hochdruckraum (12) grenzt.

5. Pleuelstange (1) nach Anspruch 4, **dadurch gekennzeichnet, dass** der zweite Kolbenteil (27) den Presssitzbereich (30a) des Kolbenelementes (7) ausbildet.

6. Pleuelstange (1) nach einem der Ansprüche 4 oder 5, **dadurch gekennzeichnet, dass** der erste Kolbenteil (17) mit dem ersten Stangenteil (2) verschraubt ist.

7. Pleuelstange (1) nach einem der Ansprüche 4 bis 6, **dadurch gekennzeichnet, dass** der erste Kolbenteil (17) eine Sackbohrung (18) mit einem Innengewinde (19) aufweist, welches mit einem Außengewinde (20) des ersten Stangenteils (2) verschraubt ist.

8. Pleuelstange (1) nach einem der Ansprüche 4 bis 7, **dadurch gekennzeichnet, dass** der erste Kolbenteil (17) und der zweite Kolbenteil (27) durch ringförmige Kontaktflächen (17a, 27a) in Richtung der Längsachse (1a) miteinander verbunden sind, welche vorzugsweise normal auf die Längsachse (1a) angeordnet sind.

9. Pleuelstange (1) nach Anspruch 8, **dadurch gekennzeichnet, dass** zur Abdichtung des ersten Hochdruckraumes (10) zwischen Kolbenelement (7) und Führungszylinder (8) anschließend an zumindest eine Kontaktfläche (17a, 27a) zumindest ein erstes Dichtungselement (22) in Richtung der Längsachse (1a) kraftfrei zwischen dem ersten Kolbenteil (17) und dem zweiten Kolbenteil (27) angeordnet ist.

10. Pleuelstange (1) nach einem der Ansprüche 4 bis 9, **dadurch gekennzeichnet, dass** ein zur Abdichtung des ersten Hochdruckraumes (10) zwischen Kolbenelement (7) und Führungszylinder (8) angeordnetes erstes Dichtungselement (22) in Richtung der Längsachse (1a) ein definiertes Spiel gegenüber dem ersten Kolbenteil (17) und/oder dem zweiten Kolbenteil (27) aufweist.

## Claims

1. Length-adjustable connecting rod (1) for a reciprocating-piston machine, in particular an internal combustion engine, having at least one first rod part (2) with a small connecting rod eye (3) and at least one second rod part (4) with a large connecting rod eye (5), which two rod parts (2) are telescopically displaceable towards and/or into one another in the direction of a longitudinal axis (1a) of the connecting rod (1), wherein the second rod part (4) has a guide cylinder (8) and the first rod part (2) is fixedly connected to a piston element (7) which is longitudinally displaceable in the guide cylinder (8), wherein on a first side of the piston element (7) between the second rod part (4) and the piston element (7) a first high-pressure chamber (10) is defined and on a second side of the piston element (7) a second high-pressure chamber (12) is defined, wherein each high-pressure chamber (10, 12) is flow-connected to at least one oil channel (15, 16), and wherein at least one sealing element (22, 24) is provided for sealing at least one high-pressure chamber (10, 12), **characterised in that** the piston element (7) is non-positively connected to the first rod part (2) in a press fit region (30a) via an interference fit (30).

2. Connecting rod (1) according to claim 1, **characterised in that** the press fit region (30a) of the piston element (7) is formed by an inner jacket surface (27b) of an annular end region (7a) of the piston element (7) facing the small connecting rod eye (3) and the press fit region (30b) of the first rod part (2) is formed by an outer jacket surface (23a) of a shoulder region (23) of the first rod part (2) facing away from the small connecting rod eye (3).

3. Connecting rod (1) according to claim 1 or 2, **characterised in that** for sealing the second high-pressure chamber (12) between the first rod part (2) and the second rod part (4) or a clamping sleeve (33) fixedly connected to the second rod part (4), at least one second sealing element (24) is arranged in a force-free manner between the first rod part (2) and the piston element (7) adjacent to the press fit region (30a) of the piston element (7) in the direction of the longitudinal axis (1a), wherein preferably the second sealing element (24) has a defined play in the direction of the longitudinal axis (1a) with respect to the piston element (7) and/or the second rod part (2).

4. Connecting rod (1) according to one of claims 1 to 3, **characterised in that** the piston element (7) has a first piston part (17) and a second piston part (27), wherein the first piston part (17) adjoins the first high-pressure chamber (10) and the second piston part (27) adjoins the second high-pressure chamber (12).

5. Connecting rod (1) according to claim 4, **characterised in that** the second piston part (27) forms the press fit region (30a) of the piston element (7).

6. Connecting rod (1) according to one of claims 4 or 5, **characterised in that** the first piston part (17) is screwed to the first rod part (2).

7. Connecting rod (1) according to one of claims 4 to 6, **characterised in that** the first piston part (17) has a blind bore (18) with an internal thread (19) which is screwed to an external thread (20) of the first rod part (2).

8. Connecting rod (1) according to one of claims 4 to 7, **characterised in that** the first piston part (17) and the second piston part (27) are connected to each other in the direction of the longitudinal axis (1a) by annular contact surfaces (17a, 27a), which are preferably arranged normal to the longitudinal axis (1a).

9. Connecting rod (1) according to claim 8, **characterised in that** for sealing the first high-pressure chamber (10) between piston element (7) and guide cylinder (8) adjacent to at least one contact surface (17a, 27a), at least one first sealing element (22) is arranged in a force-free manner between the first piston part (17) and the second piston part (27) in the direction of the longitudinal axis (1a).

10. Connecting rod (1) according to one of claims 4 to 9, **characterised in that** a first sealing element (22) arranged between piston element (7) and guide cylinder (8) in the direction of the longitudinal axis (1a) for sealing the first high-pressure chamber (10) has a defined play with respect to the first piston part (17) and/or the second piston part (27).

## Revendications

1. Bielle réglable en longueur (1) destinée à un moteur à piston alternatif en particulier un moteur à combustion interne comprenant au moins une première partie de tige (2), ayant un premier oeillet de bielle (3) et au moins une seconde partie de tige (4) ayant un grand oeillet de bielle (5), les deux parties de bielle (2, 4) pouvant coulisser télescopiquement l'un dans l'autre en direction de l'axe longitudinal (1a) de la bielle (1), la seconde partie de tige (4) comportant un cylindre de guidage (8) et la première partie de bielle (2) étant reliée solidairement à un élément de piston (7) pouvant coulisser longitudinalement dans le cylindre de guidage (8), une première chambre haute pression (10) étant insérée sur un premier côté de l'élément de piston (7), entre la seconde partie de tige (4) et l'élément de piston (7), et une seconde chambre haute pression (12) étant insérée sur un second côté de l'élément de piston (7), chaque chambre haute pression (10, 12) étant reliée fluidiquement à au moins canal d'huile (15, 16), et pour permettre de garantir l'étanchéité d'au moins une chambre haute pression (10, 12) au moins un élément d'étanchéité (22, 24) étant prévu,
**caractérisée en ce que**
l'élément de piston (7) est relié par une liaison par la force, avec la première partie de tige (2) dans une zone d'ajustement serré (30a) par un ajustement serré (30).

2. Bielle (1) conforme à la revendication 1,
**caractérisée en ce que**
la zone d'ajustement serré (30a) de l'élément de piston (7) est formée par la surface enveloppe interne (27b) d'une zone d'extrémité annulaire (7a) de l'élément de piston (7) tournée vers le petit oeillet de bielle (3), et la zone d'ajustement serré (30b) de la première partie de tige (2) est formée par la surface enveloppe externe (23a) d'une zone formant talon (23) de la première partie de tige (2) tournée à l'opposé du petit oeillet de bielle (3).

3. Bielle (1) conforme à la revendication 1 ou 2,
**caractérisée en ce que**
pour permettre de garantir l'étanchéité de la seconde chambre haute pression (12), entre la première partie de tige (2) et la seconde partie de tige (4) ou une douille de serrage (33), reliée solidairement à la seconde partie de tige (4) au moins un second élément d'étanchéité (24) est monté, en liaison avec la zone d'ajustement serré (30a) de l'élément de piston (7), sans contrainte en direction de l'axe longitudinal (1a) entre la première partie de tige (2) et l'élément de piston (7), et de préférence le second élément d'étanchéité (24) comporte en direction de l'axe longitudinal (1a) un jeu défini par rapport à l'élément de piston (7) et/ou à la seconde partie de tige (2).

4. Bielle (1) conforme à l'une des revendications 1 à 3,
**caractérisée en ce que**
l'élément de piston (7) comporte une première partie de piston (17) et une seconde partie de piston (17), la première partie de piston (17) délimitant la première chambre haute pression (10) et la seconde partie de piston (27) délimitant la seconde chambre haute pression (12).

5. Bielle (1) conforme à la revendication 4,
**caractérisée en ce que**
la seconde partie de piston (27) forme la zone d'ajustement serré (30a) de l'élément de piston (7).

6. Bielle (1) conforme à l'une des revendications 4 et 5,
**caractérisée en ce que**
la première partie de piston (17) est vissée avec la première partie de tige (2).

7. Bielle (1) conforme à l'une des revendications 4 à 6,
**caractérisé en ce que**
la première partie de piston (17) comporte un trou borgne (18) ayant un filetage interne (19) qui est vissé avec un filetage externe (20) de la première partie de tige (2).

8. Bielle (1) conforme à l'une des revendications 4, à 7,
**caractérisée en ce que**
la première partie de piston (17) et la seconde partie de piston (27) sont reliées l'une à l'autre dans la direction de l'axe longitudinal (1a) par des surfaces de contact annulaires (17a, 27a) qui sont de préférences perpendiculaires à l'axe longitudinal (1a).

9. Bielle (1) conforme à la revendication 8,
**caractérisée en ce que**
pour garantir l'étanchéité de la première chambre haute pression (10) entre l'élément de piston (7) et le cylindre de guidage (8) au moins un premier élément d'étanchéité (22) est monté sans contrainte dans la direction de l'axe longitudinal (1a) entre la première partie de piston (17) et la seconde partie de piston (27) en liaison avec au moins une surface de contact (17a, 27a).

10. Bielle (1) conforme à l'une des revendications 4 à 9,
**caractérisé en ce qu'**
un élément d'étanchéité (22) monté pour garantir l'étanchéité de la première chambre haute pression (10) entre l'élément de piston (7) et le cylindre de guidage (8) présente, en direction de l'axe longitudinal (1a) un jeu défini par rapport à la première partie de piston (17) et/ou à la seconde partie de piston (27).
